Europäisches Patentamt

European Patent Office

Office européen des brevets

(19)

(11) Publication number: **0 364 927**

**A2**

(12) **EUROPEAN PATENT APPLICATION**

(21) Application number: **89119185.0**

(22) Date of filing: **16.10.89**

(51) Int. Cl.5: **B60C 5/00**

(30) Priority: **17.10.88 JP 261085/88**

(43) Date of publication of application:
**25.04.90 Bulletin 90/17**

(84) Designated Contracting States:
**DE FR GB IT**

(71) Applicant: **Nitta, Takashi**
**4-21-23, Nishi-Shinjuku**
**Shinjuku-ku Tokyo(JP)**

(72) Inventor: **Nitta, Takashi**
**4-21-23, Nishi-Shinjuku**
**Shinjuku-ku Tokyo(JP)**

(74) Representative: **Tiedtke, Harro, Dipl.-Ing. et al**
**Patentanwaltsbüro Tiedtke-Bühling-Kinne-**
**Grupe-Pellmann-Grams-Struif-Winter-Roth**
**Bavariaring 4**
**D-8000 München 2(DE)**

(54) **Tire and method of production thereof.**

(57) A tubeless tire for an automobile, an aircraft, or other vehicles and a method of production of the same. Innumerable spherical bubbles are charged in the interior of the tire along its inner periphery on the tread side, and an air pressure adjusting chamber is provided on the rim side. The spherical bubbles are composed of resilient bubbles having a compressed air sealed therein, and are preferably bonded together and secured integrally to the inner surface of the tire on the tread side. Accordingly, when the tire is pierced with a nail or the like, the tire does not undergo a puncture and only part of the bubbles are destroyed, making it possible to prevent the occurrence of a burst or the like.

*F I G. 1*

## TIRE AND METHOD OF PRODUCTION THEREOF

### BACKGROUND OF THE INVENTION

The present invention relates to a tire, and more particularly to improvements of a pneumatic tubeless tire for automobiles, aircraft, and all other types of vehicle as well as a method of production thereof.

Conventionally, pneumatic tires filled with air or other types of pressurized gas are known as shock absorbing wheels for absorbing vibrations caused by contact with a road surface while alleviating the resistance between the tire and a chassis of the vehicle during running. Such a pneumatic tire was invented by John Boyd Dunlop of Scotland in 1888, and various improvements have since then been made, leading to present-day tires which are capable of withstanding high-speed running and providing high safety and excellent riding comfort.

However, such an extremely useful pneumatic tire has an essential weakness in that, since the tire formed of a relatively soft material such as rubber is filled with a high-pressure gas, the tire is punctured or bursts relatively easily due to the deterioration of the tire or by being pieced with a nail, stone, or other pointed object. Such a puncture often results in an accident, and not a few tragic accidents concerning automobiles and aircraft that are widely used as means of mass high-speed transportation in recent years are attributable to the breakage of these tires.

Conventionally, such a weakness of the tire has been studied from various angles, and a relatively effective means of solution among the studies has been put to use as a tubeless tire.

Instead of using a hermetic tube employed in the ordinary type of tire, the tubeless tire itself is adapted to hold air. Thus, the tubeless tire, which was introduced in the mid-1950's, was able to offer improvements that the thermal deformation of the tire is prevented by the use of synthetic rubber invented in those days and the frequency of occurrence of punctures is reduced remarkably by the use of steel wires incorporated therein.

Even with such a tubeless tire, however, it is impossible to completely prevent punctures, and the present situation is such that the frequency of breakage of tires is still high and tires for aircraft, for instance, are replaced at a high frequency.

Accordingly, a number of improvements have been made to improve the anti-puncture performance by making further improvements on the tubeless tire. For instance, Japanese Utility Model Application No. discloses an improved arrangement in which a plurality of small air chambers are formed inside a tire body whereby a puncture caused by being pierced by a nail or the like is confined to a partial range of the tire, so that the breakage of the entire tire will not result.

With such a conventional apparatus, therefore, even in cases where a partial puncture occurs, the driver is able to move the vehicle or the like to a safe place, as appropriate, so that the puncture does not lead to a fatal accident.

However, with respect to the above-described tire having small air chambers, there have been drawbacks in that the fabrication of the tire itself is extremely difficult, that the tire is expensive, and that the tire is not advantageous in practical use. Furthermore, in actual use, the air pressure of the tire at the time of occurrence of a puncture becomes nonuniform, making it utterly impossible to effect proper running after the occurrence of the puncture.

### SUMMARY OF THE INVENTION

Although the present invention is based on the above-described conventional art in terms of the idea that the internal chamber of the tire is divided into a plurality of gas chambers, the present invention is realized from a totally novel perspective with respect to the essential internal structure of the tire, and it is therefore an object of the present invention to provide a novel tire which displays extremely high anti-puncture performance and is capable of exhibiting numerous auxiliary advantages, thereby overcoming the drawbacks of the above-described conventional art.

To this end, in accordance with one aspect of the present invention, there is provided a tire comprising: a multiplicity of flexible spherical bubbles having a gas sealed therein and, the spherical bubbles being charged in the interior of the tire along an inner periphery thereof on the side of a tread in a state in which the spherical bubbles are bonded together; and a pressure adjusting chamber which is disposed in the interior of the tire on the side of an inner periphery of a rim and in which a pressurized gas is charged.

In the tire in accordance with the present invention, the spherical bubbles in a mutually bonded state has a portion formed as a tire column portion extending to the vicinity of the rim so as to be provided with a sufficient resisting force against a sudden shock.

In addition, in accordance with the present invention, the size of the bubbles charged into the tire may be changed as desired, or the bubbles of different sizes may be combined or formed into layers to be charged into the tire so as to provide characteristics suitable for various usages.

Furthermore, in the present invention, a gas having a high coefficient of thermal expansion is used as the gas sealed in the spherical bubbles, thereby making it possible to change the internal pressure of the tire through an automatic or partially manual operation.

Moreover, in the present invention, a tread for running on a snowy road may be provided on each side of the tire, so that the treads for running on a snowy road function effectively when the internal pressure of the tire is low so as to provide sufficient running resistance.

Additionally, in accordance with another aspect of the present invention, there is provided a method of producing a tire, comprising the steps of: introducing a tire and a plurality of spherical bubbles inflated with a gas sealed therein under atmospheric temperature into a pressurizing chamber; setting the pressure of the pressurizing chamber to a level substantially identical with that of an air pressure adjusting chamber provided on the side of a rim of the tire; and charging the spherical bubbles into the tire in a state in which the spherical bubbles are shrunk with the gas compressed therein.

Accordingly, in accordance with the present invention, the aforementioned flexible gas-containing bubbles are densely provided on and bonded to the inner surface of the tire on the side of the tread and the side surfaces extending therefrom, which are the portions where the rubber tire is most likely to be punctured. Accordingly, when the tire is pierced by a nail or the like from the outside, the multiplicity of bubbles are present in that pierced portion, so that this portion virtually serves not as a portion of a pneumatic tire but constitutes a portion of a punctureless tire.

When the piercing by the nail or the like occurs, a number of the bubbles may, of course, be destroyed, but such destruction is confined to very local damage, and the user would, in many cases, take no notice of that damage.

The main characteristic feature of the present invention lies in the fact that the shock absorbing function of the tire itself is attained by the pressure adjusting chamber formed in the interior of the tire on the rim side in a manner similar to that of a conventional pneumatic tire. Namely, the spherical bubbles and the pressure adjusting chamber are capable of absorbing an external force applied to the tire in a cooperative manner by virtue of their resiliency in the same way as a conventional tire.

In addition, in accordance with the present invention, if a column portion formed of the spherical bubbles is provided extending to the vicinity of the rim, it is possible to obtain a tire which is capable of withstanding a large-weight shock exerted on the tire at the time of, for instance, the landing of an aircraft.

Furthermore, the spherical bubbles in accordance with the present invention can be varied, or bubbles of different sizes are mixed or formed into layers and are then charged into the tire, providing characteristics for allowing the tire to be used for specific applications. Additionally, if a gas having a high coefficient of thermal expansion is used as the gas to be charged in the bubbles, it is possible to obtain a tire which has a low running resistance during high-speed running and a high running resistance during snowy road running.

Moreover, in accordance with the present invention, it is possible to provide a tire which is capable of effecting safe running by providing the tire with a special tread for running on a snowy road.

The above and other objects, features and advantages of the present invention will become more apparent from the following detailed description of the invention when read in conjunction with the accompanying drawings.

BRIEF DESCRIPTION OF THE DRAWINGS

Fig. 1 is a cross-sectional view of an essential portion of a first preferred embodiment of a tire in accordance with the present invention;

Fig. 2 is a diagram illustrating the state of spherical bubbles, shown in Fig. 1, after adhesion thereof and after the pressurization of a pressure adjusting chamber;

Fig. 3 is a cross-sectional view of an essential portion a second embodiment of the invention in which a column portion which is capable of abutting against a rim is formed by the spherical bubbles;

Fig. 4 is a cross-sectional view of an essential portion of a third embodiment of the invention, in which the spherical bubbles are provided with a column portion in the same way as Fig. 3, making it possible to withstand a sudden shock;

Fig. 5 is a cross-sectional view of an essential portion of a fourth embodiment of the invention in which a sufficient resisting force is provided against the torsion applied to the tire;

Fig. 6 is a cross-sectional view of an essential portion of a fifth embodiment of the invention in which the spherical bubbles include a plurality of types of bubbles having different diameters;

Fig. 7 is a cross-sectional view of an essential portion of a sixth embodiment of the invention in which a gas having a large coefficient of thermal expansion is charged in the spherical bubbles to increase the internal pressure of the tire during high-speed running;

Fig. 8 is a cross-sectional view of an essential portion of a seventh embodiment of the invention, illustrating a tire in which a gas having a large coefficient of thermal expansion is charged in the bubbles and which is suitable for running on a snowy road; and

Fig. 9 is a cross-sectional view of an essential portion of an eighth embodiment of the invention in which a tread for running on a snowy road is provided on each side of the tire.

DESCRIPTION OF THE PREFERRED EMBODIMENTS

Referring now to the accompanying drawings, a description will be given of the preferred embodiments of the present invention.

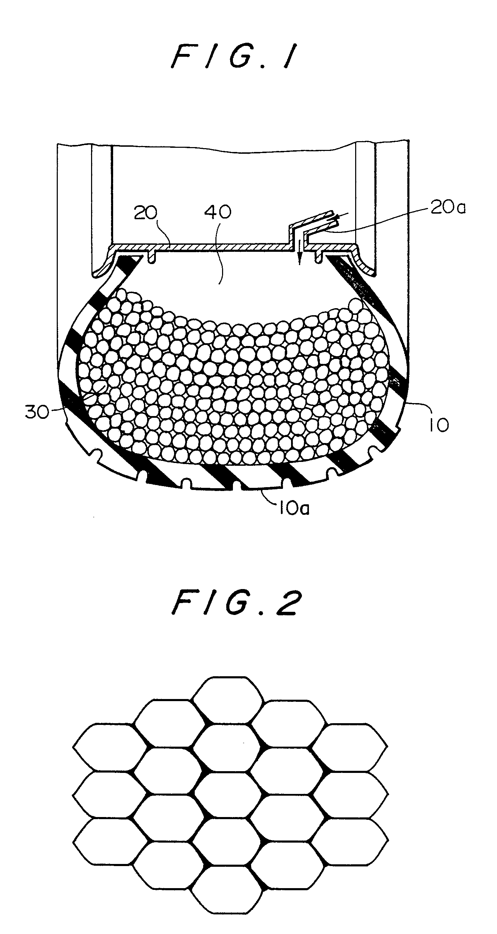

Fig. 1 shows a cross.sectional view of an essential portion of a tire to which the present invention is applied. In the drawing, the tire is illustrated with a simplified structure. In short, in terms of the structure of an actual tire, a tire body, a rim, and other component parts have more complicated structures. In this embodiment, however, only an essential portion is shown and other complicated structures are shown in a substantially simplified form so as to facilitate an understanding of the essential portion of the invention.

A tire 10 itself is no different from a conventional pneumatic tubeless tire, and a conventional structure of the tire can be used as it is as its structure. However, in order to attain unique advantages in accordance with the present invention, it is advantageous to select various types of configuration and thickness of the tire itself, although not illustrated in detail in the drawings.

Furthermore, as for the material of the tire 10, it is most suitable to use synthetic rubber having excellent characteristics produced by modern high polymer science or characteristics that can be arbitrarily selected. Specifically, it is preferable to select the material depending on the type of vehicle on which the tires are installed, such as the type classified by automobile, aircraft, etc., and a particular type of automobile in the case of automobiles. As for the material of the tire 10, it goes without saying that a plastic material, which is expected to be developed in the future, can also be used.

A rim 20 on which the tire 10 is installed has the same structure as a conventional one, and although this rim 20 is important in positively fixing the tire to a chassis, there are no characteristic features about this rim 20 in the present invention.

The feature of the present invention resides in that, as illustrated in the drawings, a multiplicity of flexible spherical bubbles 30 are accommodated in the tire 10.

A gas is hermetically charged in the bubbles 30, and, in the normal case, air is preferably used as the gas, although it is, of course, possible to use nitrogen or other inert gas.

In the present invention, the multiplicity of spherical bubbles 30 are filled in the interior of the tire 10 on the side of a tread 10a thereof.

Thus, since the bubbles 30 are filled in the interior of the tire 10 on the tread 10a side, as is apparent from the foregoing explanation, the multiplicity of bubbles 30 provide very effective resistance to puncture with respect to a tread surface of the tire 10 and side surfaces extending therefrom. This feature will become more apparent from a description that follows.

In addition, the size of the bubbles 30 is selected arbitrarily, but a diameter of 10 mm or less is preferable, or a bubble having a diameter of about 1 mm may be practically used, as required. Since the bubbles 30 themselves are preferably formed of flexible rubber or plastics, the same material as the tire 10 itself may be used as the material of the bubbles 30.

As described above, a gas is hermetically charged in the bubbles 30, and the pressure level of this gas is in normal cases set to be identical with that of a pressure adjusting chamber which will be described below, so that the pressure level of the bubbles 30 is substantially high.

The bubbles 30 themselves are substantially soft and flexible , as described above, and it can be understood from this fact that the bubbles 30 are loaded and sealed in the tire 10 in a sufficiently compressed state. In other words, it can be understood that if the bubbles 30 are removed from the tire 10, their diameter becomes large.

It can be readily understood that the number of the bubbles 30 becomes quite numerous in order to allow the multiplicity of bubbles 30, which have a diameter of several millimeters as described above, to be filled in the interior of the tire 10 on the side of its tread, as illustrated.

In accordance with a specific method of production, such a multiplicity of bubbles 30 are produced as follows: The multiplicity of bubbles 30 produced in an expanded form under atmospheric pressure, together with the tire 10, are introduced into a pressurizing chamber, the internal pressure of which is set to be substantially identical with the pressure of the air pressure adjusting chamber required for the tire 10. As a result, the bubbles 30 assume the same compressed state as that in which they are loaded in the tire 10 in a hermetically sealed state, and it is a very easy operation to load them into the tire 10 in a hermetically sealed state.

It is not preferable for the bubbles 30 to move substantially inside the tire 10, and, in the present invention, the multiplicity of bubbles 30 are preferably bonded and secured densely by leaving practically no space therebetween so as to be connected to each other and/or to the inner wall of the tire 10.

When the multiplicity of bubbles 30 are charged into the tire 10 in the pressurizing chamber, it is preferable to simultaneously spray an adhesive to the bubbles 30 or to have a liquid adhesive sucked into the interior of the tire 10. As an example of the method of production, the tire in a state in which the bubbles and the adhesive are charged in the interior of the tire is rotated in the pressurizing chamber by an appropriate means.

As a result, the bubbles 30 move quite uniformly to the inner periphery of the tire 10 on the tread side, and are arranged and fixed together by leaving practically no space therebetween as the adhesive hardens. Fig. 2 is an enlarged view of the aforementioned state of adhesion in the case where the relatively elastic bubbles 30 are used. As shown, the bubbles 30 are deformed in the form of a honeycomb. It will be appreciated from this enlarged view that the bubbles 30 in this embodiment occupy a part of the interior of the tire by leaving practically no space between the bubbles 30.

In the present invention, the bubbles 30 by no means fill up the interior of the tire 10. Such filling means that the tire is no longer a pneumatic tire but a solid tire.

As is apparent from the above description, the area which the bubbles 30 occupy in the interior of the tire 10, in reality, resembles a solid tire, but the tire 10 performs a sufficient shock absorbing function by means of its resiliency.

This is an important point in the explanation of the advantages of the tire of the invention, as will be described below.

In this embodiment, a space which is not occupied by the bubbles 30 exists in the interior of the tire 10 on the side of the rim 20. This space constitutes the pressure adjusting chamber referred to in the present invention.

In this embodiment, therefore, there is no need to form the pressure adjusting chamber by a special member, and, as is apparent from Fig. 1, a pressure adjusting chamber 40 is resultantly formed on the inner periphery of the tire 10 on the rim 20 side.

This pressure adjusting chamber 40 is similar to the interior of an ordinary tubeless tire.

The rim is provided with a known air inlet port 20a, through which air or gas of a predetermined pressure is filled into the pressure adjusting chamber 40 by a known means.

Accordingly, the tire in accordance with this embodiment displays a sufficient shock absorbing function by means of the resiliency imparted by the air filled in the pressure adjusting chamber 40, and is capable of imparting the characteristics of riding comfort provided by at least the conventional tires.

In the present invention, it is, of course, possible to form the pressure adjusting chamber 40 not only in the space not occupied by the bubbles 30 but also as a chamber specially provided separately from a bubble loaded section. In practice, however, this arrangement has a drawback in slightly complicating the production process of the tire.

When the tire is produced in accordance with the embodiment described, such a drawback is sufficiently overcome by the advantages of the invention.

The tire in accordance with this embodiment is arranged as described above, and a description will now be given of the operation thereof.

As is apparent from the foregoing description, the tire 10 is filled with the multiplicity of bubbles 30 in its interior on the side of the tread 10a and the side surfaces extending therefrom.

As a result, when a nail or other similar pointed object pieces the tire 10, this piercing does not result in the so-called puncture of the tire. The reason for this is that a tip of the nail or the like which has pierced the tire 10 only destroys one or a small number of the bubbles 30 pierced by the nail or the like. Such local and minor destruction causes no fatal damage to the tire of the present invention.

In fact, even if one or more of the bubbles 30 are destroyed, it means that the one or more bubbles assume a size double or a number of times greater than their original size. Even if a wall between the bubbles are destroyed by the nail or the like, the amount of gas escaping therefrom is very small.

This is a fundamental mechanism in realizing a punctureless tire in the present invention.

An external force exerted on the tire particularly by a nail or the like during the running of a vehicle, and its damage is, in most case, confined to the tread 10a of the tire 10 and side surfaces extending therefrom.

The fact that the inner periphery of the tire 10 on the side of the tread 10a and the side surfaces extending therefrom, which constitutes the very weak point of the tire, is filled with the bubbles 30 means that the aforementioned mechanism of the punctureless tires functions effectively in all directions of the external force applied to the tire.

One may hold apprehensions that when the tire 10 is pierced by a nail or the like, the bubbles 30 located inside the tire 10 might be destroyed by a pressure difference between inside and outside the pierced bubbles 30.

However, these are groundless apprehensions. The number of the bubbles 30 is not just a few by any means, and this is apparent from the fact that the bubbles 30 are sufficiently laminated in the radial thickness of the tire. The multiplicity of bubbles 30 thus laminated are capable of securing sufficient strength by virtue of the lamination thereof even in a case where the thickness of each layer of the bubbles is small.

It will be appreciated from the above description that the tire in accordance with the present invention possesses very excellent punctureless characteristics.

A description will now be made of the riding comfort felt by the occupant with respect to the tire of the present invention.

The bubbles 30 themselves are flexible, and although a gas is hermetically charged therein, their resiliency has toughness greater than that of the gas itself.

Accordingly, the shock absorbing characteristics of the tire or the characteristics providing riding comfort when the tire is installed on the chassis of a vehicle are mainly obtained by the pressure adjusting chamber 40 in the present invention.

As described before, it is very important for the tire of the invention to be provided with the air adjusting chamber 40 around the entire inner periphery of the tire on the rim 20 side thereof. As a result, the tire in accordance with the present invention is capable of attaining characteristics equivalent to those of pneumatic tubeless tires on which various improvements have hitherto been made.

This fact is apparent from the fact that when an external force is applied to the tire and causes the tire to deform, the pressure adjusting chamber 40 provides a sufficient space. Accordingly, the tire itself is capable of undergoing deformation in the same way as a conventional tire, and is hence capable of imparting sufficiently comfortable riding comfort to the occupant of the vehicle.

This deformation, of course, occurs when a shock is applied to the tire, and the tire in accordance with the present invention exhibits a sufficient resisting force against a deforming force applied to the tire in, for instance, a lateral direction thereof during running. Such a resisting force is attributable to the fact that the bubbles 30 are filled in a mutually adhering state inside the tire 10, as described above, and demonstrates an auxiliary advantage of the present invention in that the deformation resisting force of the tire is high.

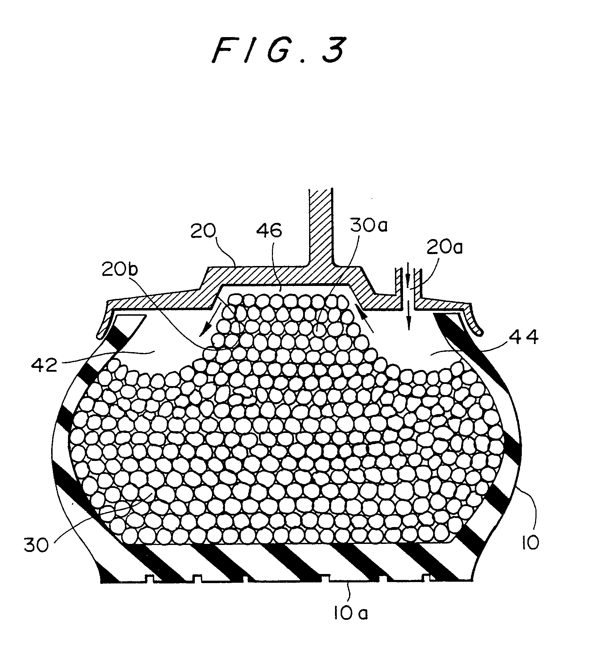

Figs. 3 illustrates a second embodiment of the present invention, in which members that are identical with or correspond to those of the first embodiment are denoted by the same reference numerals, and a description thereof will be omitted.

The characteristic feature of the second embodiment lies in that the spherical bubbles 30 are brought into close contact with each other inside the tire 10 and part of them extend to the vicinity of the rim 20. By virtue of this arrangement, when a sudden shock is applied to the tire 10, this shock is not only supported by the mere resiliency of the pressure adjusting chamber and the spherical bubbles, but the spherical bubbles 30 themselves act directly as a column for the rim 20.

In Fig. 3, a sectionally central portion of the spherical bubbles 30 extends to the vicinity of the rim 20 as a column portion 30a formed into a projecting configuration.

Accordingly, the pressure adjusting chamber in the second embodiment is divided into two annular chambers along the respective sides of the tire 10, as designated at reference numerals 42, 44, and the two chambers 42, 44 communicate with a communicating passage 46.

In this embodiment, the inner surface of the rim 20 is formed into a groove 20b, as illustrated in the drawing, and its configuration is determined in such a manner that a tip of the column portion 30a is opposed to the groove 20b. Therefore, in accordance with this second embodiment, in a state in which a normal moderate compressive force or impact is being applied to the tire, the column portion 30a of the spherical bubbles 30 absorbs the impact by means of the compressed gas between the pressure adjusting chamber and the bubbles in the same as as the first embodiment without coming into contact with the rim 20. However, when a sudden impact is applied to the tire, the column portion 30a of the spherical bubbles 30 is brought into direct contact with the rim 20 and serves as a column for supporting the impact between the rim 20 and the tread 10a of the tire, i.e., the road surface.

Accordingly, this supporting force provides a greater supporting force than the compressed air filled in the tire. As a result, the tire is sufficiently capable of supporting a shock exerted on the tire when, for instance, an aircraft lands, thereby making it possible to extend the life of the tire remarkably.

In addition, if tires of this embodiment are installed on a truck for transporting heavy-weight goods, a very high supporting force can be provided with respect to a heavy load. Hence, there is the advantage that a heavy load which, for instance, has conventionally been supported by double tires can be supported by single tires.

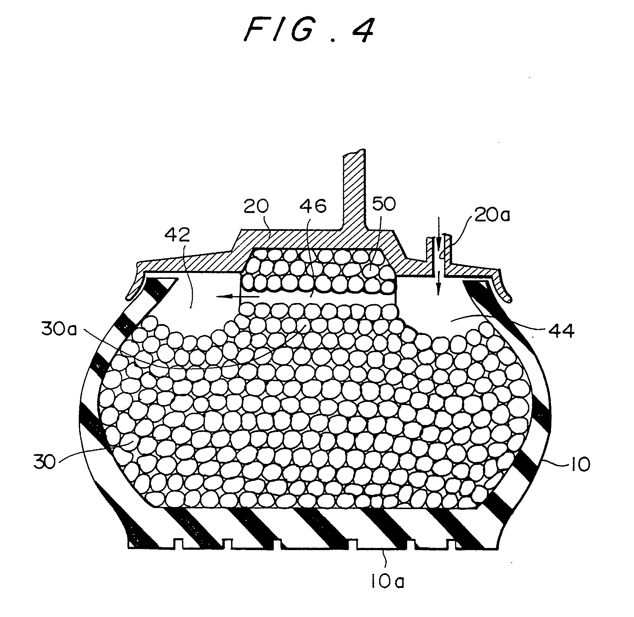

Fig. 4 illustrates a third embodiment of the present invention, and since it is similar to the second embodiment shown in Fig. 3, identical or corresponding members are denoted by the same reference numerals, and a description thereof will be omitted.

The characteristic feature of the third embodiment lies in that a tip 50 of the support portion 30a of the spherical bubbles 30 on the side of the rim is disposed in such a manner as to extend to and abut against the rim 20. In addition, a plurality of communicating passages 46 are formed in the tip 50 of the support portion 30a at appropriate intervals.

In accordance with the third embodiment, the tire-supporting force can be made large, but its resilience becomes slightly low, so that the tire in accordance with this embodiment may be effectively used for receiving a large weight of such as an aircraft in the form of an impact.

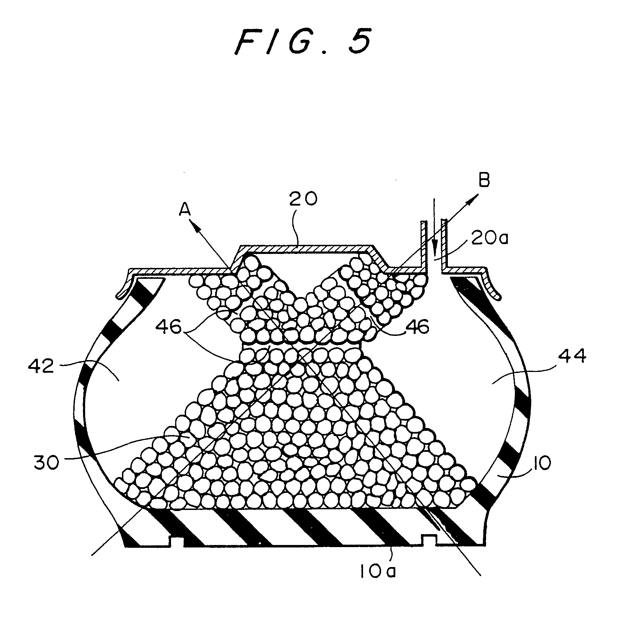

Fig. 5 shows a fourth embodiment of the present invention. In this fourth embodiment, part of the flexible spherical bubbles 30 charged in the tire 10 is located in proximity with or abut against the rim 20 as a support column in the same way as the above-described second and third embodiments. However, the arrangement is such that the tip of the support column is bifurcated in two opposite directions which are inclined by, for instance, 45° with respect to the ground as shown by arrows A and B. These bifurcated portions serve to partition the pressure adjusting chamber 40 into three chambers.

As a result, in accordance with the fourth embodiment, a very large resisting force can be produced with respect to the torsion of the tire thanks to the setting of axes of support that are inclined in the directions of arrows A, B. Accordingly, it is possible to provide a sufficient coupling force between the tire and the rim such as at the time of the turning of the vehicle.

In addition, in accordance with the present invention, the torsion-resisting force of the tire is large, so that the tire can be used very effectively for a vehicle for running at high speed.

Furthermore, in the fourth embodiment, since the axes of support are inclined in the directions of arrows A, B, if the pressure adjusting chambers are set to a high pressure level, the height of the tire increase due to the difference in capacity among the three adjusting chambers, so that the configuration of the tire becomes suitable for high-speed running when the tire width becomes narrow. Conversely, if the pressure adjusting chambers are set to to a low pressure level, the height becomes low contrary to the above case, and the tire becomes more or less flat, so that the running resistance increases. Hence, it is possible to obtain a configuration of the tire suitable for running on, for instance, a snowy road.

Thus, in accordance with the fourth embodiment, by changing the internal pressure of the pressure adjusting chambers, it becomes possible to adjust the height and width of the tire.

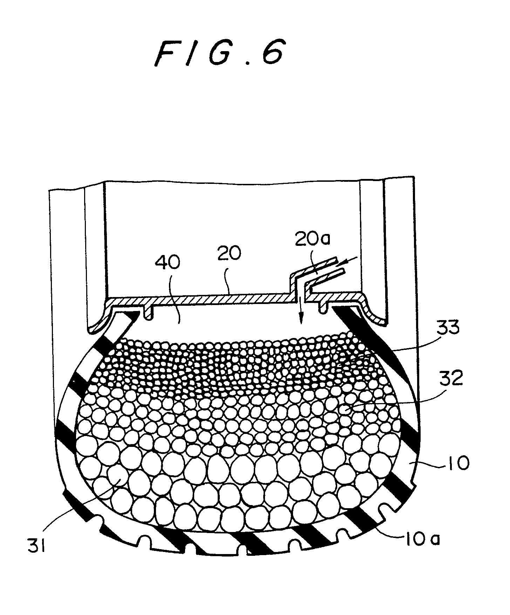

Fig. 6 illustrates a fifth embodiment of the present invention which is similar to the first embodiment, but in which spherical bubbles having different sizes are loaded in the tire.

In the embodiments described above, all the spherical bubbles 30 are provided with an identical size. In this embodiment, however, the spherical bubbles 30 have three different sizes. As illustrated, a large-bubble layer 31 is bonded and secured to the inner periphery of the tire 10, a medium-bubble layer 32 is superposed thereon, and a small- bubble layer 32 is further superposed thereon on the rim 20 side.

Accordingly, by using different sizes of the spherical bubbles, it is possible to provide a difference in the resilience of the respective bubble layers 31, 32, 33. Hence, the large-bubble layer 31 on the tread 10a side is made relatively soft and highly flexible , while the small-bubble layer 33 is made tough and less flexible .

For this reason, when the diameter of the bubbles is changed for each layer as illustrated, it is possible to obtain a tire which is relatively firm at its sectionally intermediate portion and excels in shock absorbing properties.

In particular, this tough tire whose sectionally intermediate portion is made firm by the use of the small-bubble layer 33 offers advantages in that it improves the cornering characteristics of a vehicle, and improves its road surface-holding force at the time when the vehicle is turned, so that it is useful as a tire for a high-speed vehicle.

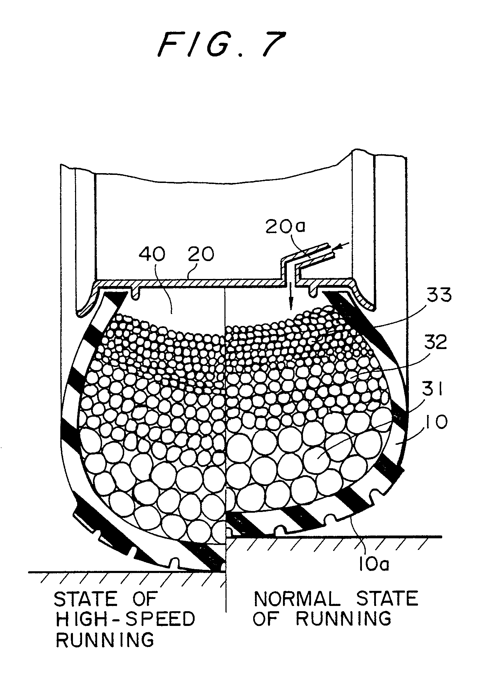

Fig. 7 illustrates a sixth embodiment of the present invention, in which the configurations of the tire and bubbles are similar to those of the fifth embodiment, and the spherical bubbles are provided in a three-layered structure in which they are loaded and bonded together in layers having different bubble sizes. The characteristic feature of this sixth embodiment lies in that gases exhibiting different coefficients of thermal expansion or shrinkage are used for the respective layers as the gas charged in the spherical bubbles. As a result, there is an advantage in that when the tires are installed on a vehicle, it is possible to have the tire characteristics to be automatically changed in correspondence with the state of running.

Namely, the right-hand half of Fig. 7 shows the normal state of running, while the left-hand half shows the state of high-speed running.

In this embodiment, since the coefficients of thermal expansion of the gases charged in the bubbles are large and are different for the respective layers, the bubbles expand due to the heat generated in the tires at the time of high-speed running, as shown in the left-hand half of the drawing, so that it is possible to set the internal pressure of the tires to a sufficient high level as compared to the normal state of running.

In other words, in accordance with the present invention, a gas having a large coefficient of thermal expansion is hermetically charged in the large-bubble layer 31, and the type of gas to be charged is then selected consecutively such that the coefficient of thermal expansion of the gas charged becomes smaller in the case of the medium-bubble layer 32 and much smaller in the case of the small-bubble layer 33.

Accordingly, when the temperature of the tire becomes high, the large-bubble layer 31 close to the tread 10a expand by a large degree. In contrast, since the coefficients of thermal expansion of the medium-bubble layer 32 and the small-bubble layer 33 on the side of the rim are smaller, the overall height of the tire becomes large.

In consequence, the high-pressure tire in accordance with this embodiment makes it possible to reduce the running resistance at the time of high-speed running. Thus, it is possible to provide a vehicle with excellent running characteristics.

In accordance with this embodiment, since the bubbles having different diameters are hermetically charged in the tire in layered form, as illustrated in the drawing, it is possible to increase the internal pressure of the bubbles acting in the direction of contacting the ground when the temperature of tire is high, and it is therefore possible to positively realize a reduction in the road surface resistance during the aforementioned high-speed running.

In other words, if a gas having a large coefficient of thermal expansion is simply charged in a conventional tubeless tire, a problem arises in that the pressure at the time of high-speed running rather acts in the lateral direction of the tire, and the tire itself becomes more or less flat during running, increasing the running resistance to the contrary. In addition, because such a tire which is forcedly made more or less flat is liable to come off the rim and is therefore dangerous, it has been impossible to use such a tire in practice. In accordance with the present invention, however, since the multiplicity of flexible spherical bubbles are hermetically charged and are bonded to each other in the tire, the expansion of the gases takes place only in the bubbles, so that the conventional drawback that the tire becomes more or less flat during a pressure rise does not occur.

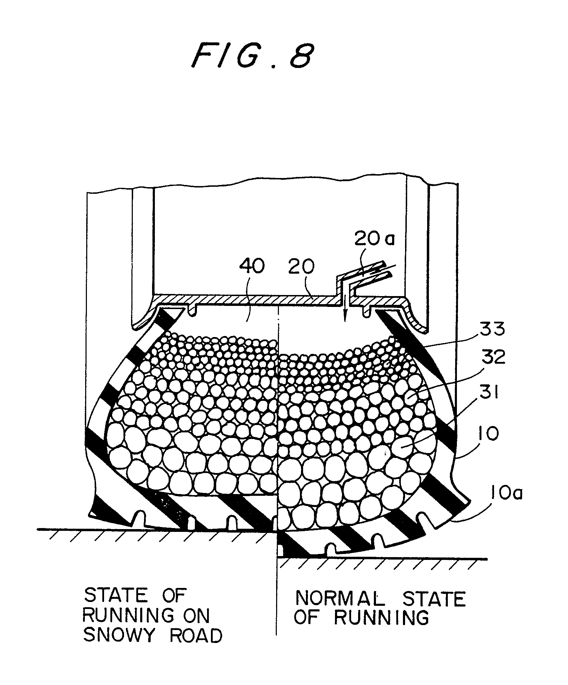

Fig. 8 illustrates a seventh embodiment of the present invention, in which a gas having a high coefficient of thermal shrinkage is hermetically charged in the spherical bubbles in a manner similar to the sixth embodiment, and the tire having these bubbles is used for snowy roads.

In other words, when the tire is cooled contrary to Fig. 7, the diameter of the bubbles shrink. As a result, when the tire in the normal state of running shown in the right-hand half of Fig. 8 is cooled and its internal pressure declines, the tire becomes more or less flat, as shown in the left-hand half of the drawing.

Accordingly, if such a tire is used, it is possible to effect non-slip running which provides a very high road-surface-gripping force during running on a snowy road.

The tire in accordance with this embodiment allows the aforementioned internal gas to shrink due to a temperature drop of the tire when the state of running changes from the normal road running to the snowy road running, thereby permitting automatic pressure adjustment.

As is apparent from the sixth and seventh embodiments, in accordance with the present invention, it is possible to obtain the advantage that the internal pressure of the tire can be automatically adjusted by virtue of the coefficient of thermal expansion or shrinkage of the gas charged in the bubbles.

However, such an automatic adjustment function is, of course, limited. Therefore, in order to allow the bubble-charged tire of the present invention to function more effectively, it is preferable to effect a partially manual air adjustment in which air in the pressure adjusting chamber 40 is let out by a predetermined amount during, for instance, the snowy road running so as to automatically accelerate cooling through contact with the snowy road by an increase in the contacting area of the tire, thereby causing the gas to shrink and increasing the ground contacting resistance.

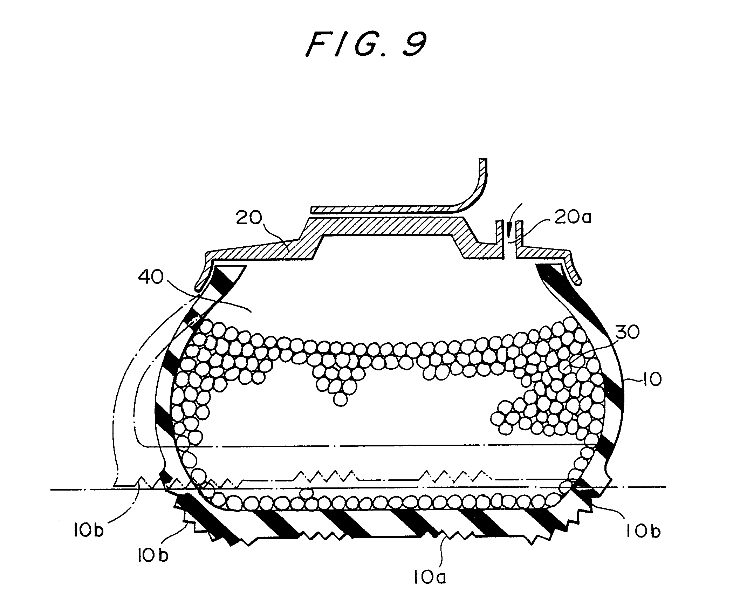

Fig. 9 illustrates an eighth embodiment of the present invention. In this embodiment, by letting air out through an automatic or partially manual operation during the snowy road running, the internal pressure of the tire is caused to decline to make the tire more or less flat, thereby increasing the running resistance and making it possible to effect safe running on a snowy road.

In this embodiment, a further improvement is made on this tire, and its characteristic feature lies in that a tread 10b for snowy road running 10b is provided in advance on each side of the tire 10, so that the tire which is made more or less flat with a drop in the internal pressure of the tire can sufficiently increase the running resistance by virtue of the treads 10b for snowy road running.

The solid line in Fig. 9 indicates the normal state of running, and in this state the treads 10b for snow road running do not practically come into contact with the road surface.

Meanwhile, the dot-chain line in the drawing illustrates the state of running on a snowy road, and it can be seen from this line that the tread 10b for snowy road running is brought into contact with the road surface due to a drop in the internal pressure of the tire. Therefore, in accordance with this embodiment, it is possible to use the tire for both normal running and snowy road running without any need to replace the tire.

Thus, it will be appreciated that the present invention makes the punctureless characteristics and excellent shock absorbing characteristics compatible.

In accordance with the present invention, a number of more auxiliary functions or advantages are produced, some of which will be illustrated below.

Firstly, in the event that the pressure adjusting chamber 40 is damaged due to a very rare cause, the tire of the present invention exhibits behavior which is different from that of a conventional tire. Namely, the internal pressure of the pressure adjusting chamber will drop suddenly.

However, the tire of the present invention has the multiplicity of bubbles 30, and when the pressure adjusting chamber 40 is punctured, the volume of the bubbles unfailingly remain in the tire 10, which does not lead to the occurrence of a fatal accident of a vehicle which could occur if the tires of the present invention are not installed on the vehicle.

Furthermore, in the state of puncture of the pressure adjusting chamber 40, the tire becomes more or less flat due to the escape of air, and the running resistance increases appreciably. As a result, this increase in the running resistance functions as a breaking force on the vehicle, thereby stopping the vehicle speedily.

In this context as well, the excellent characteristics of the present invention are obvious.

Secondly, if the tires of the present invention are applied to a large-weight vehicle, such as a large truck and an aircraft, the punctureless characteristics of the present invention make it possible to prolong the period of tire replacement in the light of the safety of the tires. In addition, conventionally used double tires can be replaced by single tires, and industrial advantages are therefor immensely high.

Thirdly, in the foregoing embodiments, the bubbles 30 are sufficiently flexible , which means that, if the bubbles 30 that are compressed in the tire are removed to the outside which is under atmospheric pressure, the diameter of the bubbles 30 will expand sufficiently. In the present invention, however, it is not necessary to set the internal pressure of the bubbles 30 at a level higher than the atmospheric pressure, nor to set it in the state of a vacuum. If the bubbles 30 are fabricated under atmospheric pressure so that their internal pressure is identical with the atmospheric pressure, the fabrication can be extremely facilitated, the production cost of the bubbles containing an atmospheric-pressure gas in which air is normally used can be lowered appreciably. In this case, it is necessary for the bubbles 30 to be coated with relatively hard shells. Even such bubbles which are less flexible are capable of sufficiently occupying the space of the tire 10 on the side of the tread 10a by leaving practically no space therebetween. In addition, these slightly hard bubbles 30 produce the advantage that pressure which is lower than in a conventional case is exerted on the portions of the tire 10 occupied by the bubbles 30, i.e., the tread 10a and side portions extending therefrom. As a result, this makes it possible to reduce the thickness of the tire 10 than that of a conventional tire. Namely, the tire having a small thickness becomes light-weight, and various advantages derived from it are, needless to say, extremely important.

In the above-described embodiments, a method of production is employed in which individual spherical bubbles are charged into the tire and are then bonded and fixed. In the present invention, however, it is possible to adopt other arbitrary methods of production with respect to the charging of the bubbles into the tire.

For example, a multiplicity of bubbles in which a high-pressure gas is sealed in in advance are bonded together and formed into the configuration of a spongy plate on an appropriate flat plate, and a belt of the bubbles thus obtained can be adhered and fixed to the inner periphery of the tire.

Such a belt of bubbles in the form of a spongy plate can be effectively used for the bubble layers respectively formed of bubbles having different diameters, as shown in Figs. 6 and 7.

As another method of producing the bubbles in accordance with the present invention, a foaming agent is mixed with a molten plastic, and the mixture is made flat on an appropriate flat surface, thereby forming a layer of spherical bubbles through the foaming action.

In accordance with this method, the bubbles can be fabricated as a belt having the configuration of a spongy plate containing bubbles therein, and if this layer is applied and bonded to the inner periphery of the tire, it is possible to form desired charged bubbles in the tire.

As described above, in accordance with the present invention, since the arrangement is such that a multiplicity of flexible spherical bubbles with a gas sealed therein are charged in the interior of the tire along its inner periphery on the tread side in a state in which the bubbles are bonded together, an extremely excellent tire having punctureless characteristics which has a small rate of occurrence of accidents can be provided with a simple arrangement and at low costs.

A tubeless tire for an automobile, an aircraft, or other vehicles and a method of production of the same. Innumerable spherical bubbles are charged in the interior of the tire along its inner periphery on the tread side, and an air pressure adjusting chamber is provided on the rim side. The spherical bubbles are composed of resilient bubbles having a compressed air sealed therein, and are preferably bonded together and secured integrally to the inner surface of the tire on the tread side. Accordingly, when the tire is pierced with a nail or the like, the tire does not undergo a puncture and only part of the bubbles are destroyed, making it possible to prevent the occurrence of a burst or the like.

## Claims

1. A tire comprising:
a multiplicity of flexible spherical bubbles having a gas sealed therein and, said spherical bubbles being charged in the interior of said tire along an inner periphery thereof on the side of a tread in a state in which said spherical bubbles are bonded together; and
a pressure adjusting chamber which is disposed in the interior of said tire on the side of an inner periphery of a rim and in which a pressurized gas is charged.

2. A tire according to Claim 1, wherein said spherical bubbles in a mutually bonded state has a portion formed as a tire column portion extending to the vicinity of said rim.

3. A tire according to Claim 2, wherein said tire column portion has a configuration in which a sectionally central portion of said spherical bubbles projects, said tire column portion extending to the vicinity of said rim in such a manner that a gap is formed between the same and said rim.

4. A tire according to Claim 2, wherein said tire column portion of said spherical bubbles extends and abuts against said rim, a gas communicating passage being formed in said tire column portion.

5. A tire according to Claim 4, wherein said tire column portion abutting against said rim is constituted by at least two intersecting column portions each having an inclined axis of support.

6. A tire according to Claim 1, wherein said spherical bubbles charged in said tire includes a plurality of types of bubbles having different sizes.

7. A tire according to Claim 6, wherein large-diameter bubbles are disposed on the side of said tread and small-diameter bubbles are disposed on the side of said rim.

8. A tire according to Claim 1, wherein a gas having a large coefficient of thermal expansion and shrinkage is sealed in said spherical bubbles.

9. A tire according to Claim 8, a gas having a larger coefficient of thermal expansion and shrinkage than that for said spherical bubbles on the side of said rim is sealed in said spherical bubbles on the side of said tread.

10. A tire according to Claim 1, wherein the diameter of said spherical bubbles is 10 mm or less.

11. A tire according to Claim 1, wherein the material of said spherical bubbles is identical with that of said tire.

12. A tire according to Claim 1, wherein a gas whose volume changes substantially due to fluctuations in the temperature is sealed in said spherical bubbles.

13. A tire according to Claim 1, wherein a tread for running on a snowy road is provided on each side of said tire.

14. A method of producing a tire, comprising the steps of:
introducing a tire and a plurality of spherical bubbles inflated with a gas sealed therein under atmospheric temperature into a pressurizing chamber;
setting the pressure of said pressurizing chamber to a level substantially identical with that of an air pressure adjusting chamber provided on the side of a rim of said tire; and
charging said spherical bubbles into said tire in a state in which said spherical bubbles are shrunk with said gas compressed therein.

15. A tire according to Claim 13, wherein an adhesive is sprayed to said spherical bubbles or the inner surface of said tire, and said spherical bubbles are bonded and secured to the inner surface of said tire on the tread side.

16. A tire according to Claim 13, wherein said tire with said plurality of spherical bubbles sealed therein is rotated centrifugally around an axis thereof, thereby causing said spherical bubbles charged to be secured to the inner surface of said tire on the tread side.

# F I G . I

# F I G . 2

# F I G. 3

# FIG . 4

# FIG. 5

## F I G . 6

# FIG. 7

STATE OF
HIGH-SPEED
RUNNING

NORMAL STATE
OF RUNNING

## FIG . 8

STATE OF
RUNNING ON
SNOWY ROAD

NORMAL STATE
OF RUNNING

# FIG. 9